# FASCICULE DE BREVET EUROPEEN

(11) **EP 2 204 981 B1**
(45) Date de publication et mention de la délivrance du brevet: **08.02.2012**
(21) Numéro de dépôt: 09180981.4
(22) Date de dépôt: 30.12.2009
(51) Int. Cl.: H04N 5/225, H04N 5/33

(54) **Procédé d'évaluation de salissure différentielle**
Verfahren zur Differentialbewertung der Verschmutzung
Method for differential soiling assessment

(30) Priorité: 30.12.2008 FR 0859130
(43) Date de publication de la demande: 07.07.2010
(73) Titulaire: Commissariat à l'Énergie Atomique et aux Énergies Alternatives, 75015 Paris (FR)
(72) Inventeur: Balorin, Colette, 04100 Manosque (FR); Jouve, Michel, 13510 Eguilles (FR); Desgranges, Corinne, 84120 Pertuis (FR)
(74) Mandataire: Ilgart, Jean-Christophe

(56) Documents cités:
- WO-A-01/15435
- DE-A1- 10 332 248

## Description

Le sujet de l'invention est un procédé d'évaluation de salissure différentielle d'un hublot.

Son domaine technique est l'observation d'une scène située derrière le hublot par une caméra thermique telle qu'une caméra infrarouge prenant des images de la scène par thermographie. Il existe plusieurs applications importantes, comme l'étude de la matière à très haute température et notamment à l'état de plasma, y compris dans les tores de fusion nucléaire, ou la surveillance de procédés industriels, impliquant une combustion ou un chauffage dans un four comme la sidérurgie, la fonderie, ou la cimenterie.

L'image restituée par la caméra exprime les quantités d'énergie reçues par les détecteurs associés en la matrice de pixels de la caméra. Afin de convertir ces mesures d'énergie en une image de température, une table de conversion doit être obtenue par étalonnage puisque chaque détecteur associé à un pixel délivre une réponse propre quand il est atteint par une même valeur d'énergie. Cette table est en général définie par un coefficient de gain et une valeur à l'origine (décalage de zéro) pour chacun des détecteurs, qui définissent une relation linéaire entre l'énergie reçue et la température.

Les mesures sont aussi influencées par les éléments, notamment optiques, que doit traverser le rayonnement avant d'atteindre les détecteurs. L'étalonnage doit alors être entrepris dans les conditions de service de la caméra. Dans le cas d'une scène à haute température, présente derrière une paroi d'enceinte, l'observation se fait par un hublot enchâssé dans la paroi de l'enceinte et l'étalonnage se fait donc aussi à travers le hublot.

Des salissures du hublot accroissent l'absorption du rayonnement et obligent à ajuster l'étalonnage pour continuer à obtenir des mesures correctes. Ces salissures sont en général inévitables avec les processus mentionnés. Dans le cas de l'étude des plasmas, des particules de carbone ou d'autres matières sont détachées de l'installation et certaines se déposent sur le hublot. De plus, la salissure du hublot n'est généralement pas homogène puisque des phénomènes divers (champs magnétiques, circulation de gaz, etc.) favorisent le dépôt des particules sur certaines portions du hublot.

Un premier procédé d'ajustement de l'étalonnage consiste à disposer un élément chauffant dans le champ de la visée, tel qu'une source infrarouge ponctuelle, dont l'énergie est connue, derrière le hublot. L'image de l'élément chauffant permet d'évaluer une caractéristique d'ensemble de transmission du rayonnement à travers le hublot. L'étalonnage implique toutefois seulement une petite portion de la superficie du hublot, de sorte qu'il est inefficace si la salissure du hublot est hétérogène. Le document DE - A - 103 32 248 décrit un dispositif de ce genre. Il comprend une petite surface de calibration munie d'un thermomètre, et de plus une calibration d'ensemble de la caméra est possible sur la pièce étudiée (une roue de turbine à gaz). Cette calibration d'ensemble est toutefois possible seulement au repos, à température uniforme. Et l'utilisation d'un élément chauffant de grande surface, occupant tout le champ de visée de la caméra, aurait des inconvénients tels qu'une difficulté d'aménagement ou des risques de défaut d'homogénéité d'émission. WO - A - 01/15435 décrit un tel dispositif.

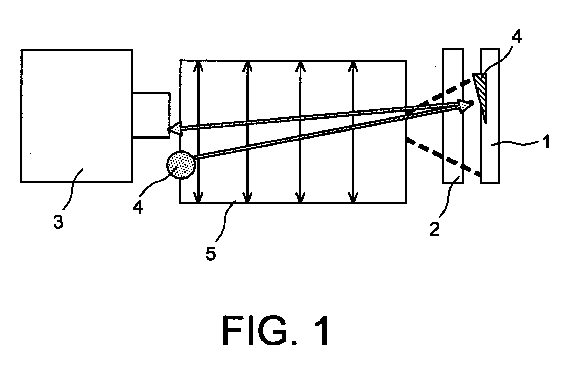

Un autre dispositif plus compliqué est représenté à la figure 1. Il repose sur la présence, dans certaines applications, d'un volet 1 situé derrière le hublot 2 par rapport à la caméra 3: le volet 1 est escamotable entre la position représentée, où il cache la scène, et une position de service de la caméra 3 où il est situé à côté du hublot 2 et ne gêne donc pas l'observation de la scène. Un miroir 4 a ici été ajouté au hublot 1 et une source infrarouge 5 est placée à côté de la caméra 3, hors de son champ de visée. Son rayonnement traverse une optique 6 située devant la caméra, puis le hublot 2, et il est réfléchi par le miroir 4 vers la caméra 3. Ici encore le rayonnement mesuré reflète la salissure du hublot, mais sur une partie seulement. Ce dispositif souffre donc des mêmes insuffisances que le précédent.

L'invention est relative à un dispositif d'un genre différent, où aucune source caractérisée d'énergie n'est utilisée: l'échauffement, nécessaire de toute façon pour émettre l'énergie permettant de réajuster les coefficients de gain des tables d'étalonnage des détecteurs, peut être assuré par le processus même en cours, situé derrière le hublot, et la mesure se fait par l'intermédiaire d'un écran, tel que le volet susmentionné, jusqu'à présent utilisé seulement pour l'interception du rayonnement et le masquage de la scène, la caméra étant alors inactive. La calibration est donc possible pendant le processus en cours et sans nécessiter de perte de temps importante, d'autant moins que le volet, exposé à la température du processus pendant qu'il laisse le hublot ouvert, peut être utilisé sans délai. Sa température est normalement uniforme même si le processus est hétérogène, grâce à la conduction de chaleur qui existe sans cesse. Sinon, il est possible d'améliorer cette conduction par un revêtement plus conducteur, avantageusement situé sur la face interne du volet (dirigée vers le processus et l'arrivée de chaleur).

Pour résumer, l'invention est relative à un procédé d'évaluation de salissure différentielle d'un hublot devant lequel est installée une caméra thermique, consistant à enregistrer par la caméra au moins une image après avoir placé un écran derrière le hublot, l'écran étant homogène en matière émissive de la chaleur et pourvu d'un moyen de mesure de sa température, à mesurer pour chaque pixel de la caméra une énergie reçue, et à ajuster une table de correction donnant pour chacun des pixels une évaluation de température de champ de visée en fonction de ladite énergie reçue. L'écran est revêtu au moins sur le face vue par la caméra d'une matière composite de carbone. Compte tenu du bruit de fond des caméras pour de faibles signaux, il est avantageux d'enregistrer par la caméra plusieurs images après avoir placé un écran derrière le hublot, et de moyenner ces images afin d'améliorer la précision.

L'invention sera maintenant décrite en liaison aux figures, dont:
- la figure 1 déjà décrite représente un dispositif de l'art antérieur,
- les figures 2 et 3 représentent la mise en oeuvre du procédé conforme à l'invention,
- et la figure 4 illustre une réalisation concrète de volet.

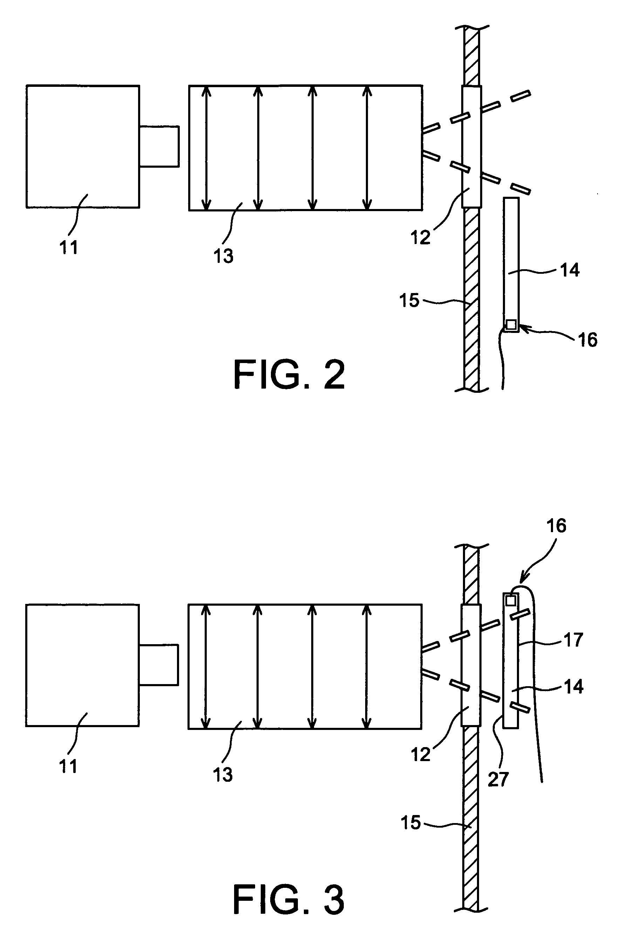

La configuration d'observation d'une scène à haute température est représentée à la figure 2. Une caméra infrarouge 11 est placée devant un hublot 12 par l'intermédiaire des dispositifs d'une optique 13. Le champ de visée de la caméra 11 s'étend à travers le hublot 12. Un volet 14, situé derrière une paroi 15 dans laquelle le hublot 12 est enchâssé, est alors placé de côté de manière à dégager celui-ci. L'étalonnage conforme à l'invention peut commencer dans la configuration de la figure 3, où le volet 14 est placé derrière le hublot 12 et en face de lui. Quand le volet 14 est soumis à un échauffement, notamment quand le processus situé derrière la paroi 15 fonctionne, l'énergie qu'il rayonne peut être captée par la caméra 11 et associée à une température du corps émetteur pour chaque pixel de la caméra 11, qui se prête à un ajustement de la table d'étalonnage.

Certaines conditions sont requises pour donner un étalonnage correct. La température du volet 14 doit d'abord être connue afin d'ajuster la température estimée à la température réelle. Cela est possible s'il est équipé d'un moyen de mesure de température tel que la partie active d'un thermocouple 16.

Une autre condition est que la température du volet soit uniforme même si le processus responsable du chauffage n'est pas homogène. Cette condition est remplie si le volet 14 est en une matière suffisamment conductrice de la chaleur ou éventuellement si sa face cachée 17 à la caméra, c'est-à-dire tournée vers le processus, est revêtue d'une telle matière. Il a été constaté que les revêtements composites en fibre de carbone de type CFC (carbone-fibres de carbone) avaient cette propriété. Dans le cas particulier d'installations dans lesquelles du plasma est étudié, où ce matériau est apprécié puisque les particules de carbone qui s'en détachent sont peu polluantes du plasma, par contre celui-ci détache aussi des particules métalliques d'éléments internes à l'installation qui peuvent se déposer sur la face du volet vue par la caméra et sur le hublot 12, ce qui a l'effet de modifier l'émissivité de la face du volet vue par la caméra et donc de fausser la mesure. Pour éviter cela, le volet doit être monté au plus près du hublot.

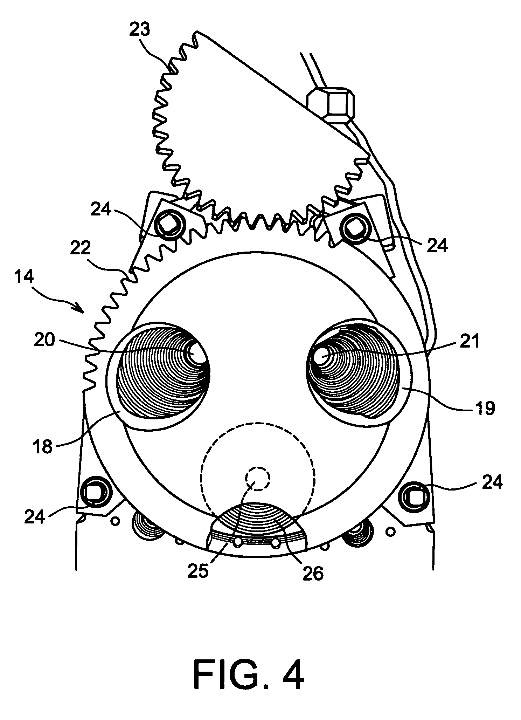

Une réalisation concrète est illustrée à la figure 4. Le volet 14 est vu de l'intérieur de l'enceinte et consiste en un disque pourvu de trois ouvertures 18, 26 et 19 pouvant être placées devant trois hublots 20, 25 et 21.

Un secteur du volet 14 est denté de manière à faire tourner le volet 14 par une roue dentée 23, après quoi les hublots 20, 25 et 21 pourront être masqués. Le volet 14 tourne autour d'un axe central fictif, invisible sur la figure ; il est maintenu en place, guidé et soutenu par quatre griffes latérales 24.

Un autre avantage des composites en fibre de carbone est qu'ils ont une émissivité égale à 1 dans l'infrarouge, et qu'ils se conduisent donc comme un corps noir parfait. Si la face 27 du volet 14 vue par la caméra 11 est ainsi revêtue de matière composite de carbone, cette condition est donc réalisée et l'homogénéité de température est encore assurée.

Le choix du volet 14 placé juste derrière le hublot 12 comme référence thermique pour l'étalonnage de la caméra 11 a encore les avantages qu'il ne requiert aucun aménagement de l'installation autre que celui du thermocouple 16 ; qu'il est placé à une distance connue et invariable, et où il est normalement vu par la caméra 11; et que son apparition derrière le hublot 12, généralement refroidi en même temps que la paroi 15, n'échauffe pas le hublot 12 ou l'échauffe seulement avec lenteur, donnant ainsi le temps nécessaire (de l'ordre de la seconde) pour accomplir l'ajustement d'étalonnage sans que l'échauffement du hublot 12 puisse le perturber : l'homogénéité d'émission vers la caméra 11 non seulement subsiste sur la superficie du champ de vision mais reste stable avec le temps.

## Revendications

1. Procédé d'évaluation de salissure différentielle d'un hublot (12) devant lequel est installée une caméra thermique (11), consistant à enregistrer au moins une image par la caméra (11) après avoir placé un écran (14) derrière le hublot, l'écran étant homogène en matière émissive de la chaleur et pourvu d'un moyen (16) de mesure de sa température, puis à mesurer pour chaque pixel de la caméra une énergie reçue et émise par l'écran, et à ajuster une table de correction donnant pour chacun des pixel une évaluation de température de champ de visée en fonction de ladite énergie reçue, **caractérisé en ce que** l'écran est revêtu au moins sur la face vue par la caméra d'une matière composite de carbone.

2. Procédé d'évaluation selon la revendication 1, **caractérisé en ce que** l'écran (14) est un volet monté derrière une paroi (15) dans laquelle le hublot est enchâssé et mobile entre une position où il fait face au hublot et une position où il est à côté du hublot.

3. Procédé d'évaluation selon la revendication 1 ou 2, **caractérisé en ce qu'**il consiste à enregistrer par la caméra plusieurs images après avoir placé un écran derrière le hublot, et de moyenner ces images afin d'améliorer la précision.

## Claims

1. A method for differential soiling assessment of a porthole (12) in front of which a thermal camera (11) is installed, consisting of recording at least one image using the camera (11) after placing a screen (14) behind the porthole, the screen being homogenous in heat-emissive material and provided with a means (16) for measuring the temperature thereof, then measuring, for each pixel of the camera, an energy received and transmitted by the screen, and adjusting a correction table providing, for each of the pixels, a viewing angle temperature assessment as a function of said received energy, **characterized in that** the screen is coated at least on the surface seen by the camera with a carbon composite material.

2. The assessment method according to claim 1, **characterized in that** the screen (14) is a shutter mounted behind a wall (15) into which the porthole is built in and mobile between a position facing the porthole and a position next to the porthole.

3. The assessment method according to claim 1 or 2, **characterized in that** it consists of recording several images using the camera after having placed a screen behind the porthole, and averaging those images in order to improve the precision.

## Patentansprüche

1. Verfahren zur Beurteilung einer differentiellen Verschmutzung eines Bullauges (12), vor dem eine Wärmebildkamera (11) installiert ist, wobei es darin besteht, mindestens ein Bild mittels der Kamera (11) aufzuzeichnen, nachdem ein Schirm (14) hinter dem Bullauge angeordnet wurde, wobei der Schirm in homogener Weise aus Wärme emittierendem Material besteht und mit einer Einrichtung (16) zum Messen seiner Temperatur versehen ist, dann für jedes Pixel der Kamera eine empfangene und vom Schirm emittierte Energie zu messen, und eine Korrekturtabelle anzupassen, die für jedes der Pixel ein Sichtfeldtemperaturbeurteilung in Abhängigkeit von der empfangenen Energie angibt, **dadurch gekennzeichnet, dass** der Schirm zumindest auf der für die Kamera sichtbaren Seite mit einem Kohlenstoff-Verbundmaterial verkleidet ist.

2. Beurteilungsverfahren nach Anspruch 1, **dadurch gekennzeichnet, dass** der Schirm (14) ein Blendenschieber ist, der hinter einer Wand (15) montiert ist, in welche das Bullauge eingelassen ist, und der zwischen einer Position, in welcher er dem Bullauge gegenüberliegt, und einer Position bewegbar ist, in welcher er sich neben dem Bullauge befindet.

3. Beurteilungsverfahren nach Anspruch 1 oder 2, **dadurch gekennzeichnet, dass** es darin besteht, mittels der Kamera mehrere Bilder aufzuzeichnen, nachdem ein Schirm hinter dem Bullauge angeordnet wurde, und eine Mittelwertbildung bei diesen Bildern durchzuführen, um die Genauigkeit zu verbessern.
